# EUROPEAN PATENT APPLICATION

(11) **EP 2 587 745 A1**
(43) Date of publication of application: **01.05.2013**
(21) Application number: 11186621.6
(22) Date of filing: 26.10.2011
(51) Int. Cl.: H04L 12/58, G06Q 10/10

(54) **A method and system of obtaining contact information for a person or an entity**

(71) Applicant: Swisscom AG, 3050 Bern (CH)
(72) Inventor: Carr, Tim, 8307 Effretikon (CH)
(74) Representative: P&TS SA (AG, Ltd.)

(57) **Abstract**

A method of obtaining contact information for a person or an entity is disclosed. Said method comprises detecting a name of said person or said entity in a frame from a screen (1) of a device; determining a presence status for said detected name based on one or more connectivity status for said detected name in one or more communication applications and/or one or more databases, where said one or more communication applications operate on said device from which said frame originates and where said one or more databases are accessible on said device; displaying said presence status (3, 5) on said screen (1) of said device.

## Description

### Field of the invention

The present invention concerns a method and system of obtaining contact information for a person or an entity according to the independent claims. Dependent claims give advantageous embodiments of the invention.

### Description of related art

Network applications are known in the prior art that provide access to an online network and having a number of users currently connected to said online network. The status of each user is shown on the computer of a user, so it is possible to see if and how one of the other users can be contacted. As an example, they can be contacted by a VoiP-call, an Instant Message, and via Email. Sometimes, the online status and/or location of the connected user are shown. As an example for such network applications MSN/Messenger network, AIM/Yahoo, Gchat/Google, WhatsApp, Facebook, Skype, Cisco and others can be cited. Currently, a user must load these applications into his personal device, start these applications and enter names into it to see if someone's online, what their status is, how they can be contacted, etc. Furthermore, additional software like Pidgin or Trillian can be loaded, which show the presence in a variety of different applications.

It is a disadvantage of the present state of the art, that a user cannot easily check, which online network application a person is connected to.

It is another disadvantage that the user has to change applications from the one they are using to another application (e.g. skype or pidgin) to determine whether the user is online. This context switch costs the user time and has been, in general, shown to be disruptive to user workflows.

### Brief summary of the invention

It is one aim of the present invention to have a presence and status control, and a control of how a person that is connected to an online network can be reached across the computer desktop including in applications and services, without having to customize each application or service.

It is another aim of the present invention to have one set of presence controls of a person connected to an online network that work for all presence-providing services without the user having to think about which service may be connected.

According to the invention, these aims are achieved by means of a method according to claim 1. In particular, this is solved by a method of obtaining contact information for a person or an entity, wherein said method comprises:
●detecting a name of said person or said entity in a frame from a screen of a device;
●determining a presence status for said detected name based on one or more connectivity status for said detected name in one or more communication applications and/or one or more databases, where said one or more communication applications operate on said device from which said frame originates and where said one or more databases are accessible on said device;
●displaying said presence status on said screen of said device.

The aims may also be achieved according to the independent system claim by a computer program product comprising a software code of said client side application.

Dependent claims give advantageous embodiments.

Advantageously, a screen shot of the screen is taken as a frame and the names of all persons on said screen shot are recognized by a text recognition (OCR) program and thereafter a Named Entity Recognition (NER) algorithm for finding names is applied. Alternatively, a name of a person on said screen could be selected manually by said user.

In another embodiment of the invention, the screen shot could be sent to an internet-based OCR and NER service for recognizing said person mentioned on the screen and sending back the detected name(s) to said personal computer or said mobile phone. Alternatively, only one of the previously mentioned steps could be done as an internet-based method, and the other may be performed locally on the personal computer or mobile phone.

The inventive method could comprise recognizing presence-providing applications running on said computer or a mobile phone. The step of identifying in which of said applications said recognized person is currently connected could advantageously comprise checking a location-based internet service or a web-service for an application.

The step of recognizing at least one name of a person can comprise the step of searching a personal list of names of said user in said computer or a mobile phone or contacting an internet data source. The step of displaying said presence status on said screen may advantageously comprise a presence list, where the presence status of a number of persons is displayed.

The marking of the recognized name can be done in a number of ways. In one embodiment a dashed-underline is put underneath all recognized persons on said screen together with an icon. When said mouse hovers over the name of the person or the icon, the details of the person are displayed. If the coordinates of the name in said picture or screen shot are known and a space is detected next to the name, the presence status could be displayed in the free space. Alternatively, the presence details of recognized names could be overlaid on top of the screen using a transparent window, which does not change or modify the underlying application(s).

However, presence information may be, for example, displayed in a corner of the screen. If available, additional information for said person on said presence status can be shown.

Advantageously, the presence of said person in said applications indicated in the presence list is updated continuously or periodically so that the user knows e.g. when a person goes offline in an application, changes status or location, etc. The presence status gives the user the possibility to see how a person can be contacted over a respective online network. Especially a VoIP-call can be initiated or an instant message may be send.

In an another embodiment, a second one of said one or more communication applications is selected and a second communication session is initiated if said communication session cannot be established over a first one of said one or more communication applications.. Such a selection may be performed according to numerous criteria, including, but not limited to, personal preference, communication quality, or cost.

The invention relates as well to a computer program product comprising a software code of a client side application which can be loaded in a memory of a personal computer or mobile phone, and executed by a processor so as to run the steps present method when starting said software code.

### Brief Description of the Drawings

The invention will be better understood with the aid of the description of an embodiment given by way of example and illustrated by the figures, in which:
Fig. 1 shows an exemplary screenshot of the user's personal computer;
Fig. 2 shows the screenshot of Fig. 1, where different names have been recognized and marked, in accordance with an embodiment of the invention;
Fig. 3 shows an exemplary contact card of a recognized person with the possibility of contacting the person via email, Instant messenger or call;
Fig. 4 shows an exemplary list of all recognized name on the user's screen, including the presence in online networks applications; and
Fig. 5 shows an exemplary contact card of a recognized person, where different persons with the same name have been found on the Internet.

### Detailed Description of possible embodiments of the Invention

The present invention concerns a method of detecting a presence of one or more persons or entities in applications running on a personal computer or a mobile phone of a user, displayed on a screen of said device. This is done by a client side application, which may run on said computer or mobile phone. In accordance with various embodiments of the invention, the application may run elsewhere and communicate with the user's personal computer or mobile phone via, for example, the Internet. In the frame work of the present invention, the applications provide access to one or more online networks and having a number of users currently connected to said one or more online networks. Examples for such network or communication applications may be MSN/Messenger network, AIM/Yahoo, Trillian,Pidgin, Gchat/Google, WhatsApp, Facebook, Skype, Cisco and others can be cited. In these applications, a service is offered to show the presence of persons or entities, which are in the personal contact list of the user. A person or entity who is online can be contacted in various ways by the user including placing a VolP call and sending an instant message.

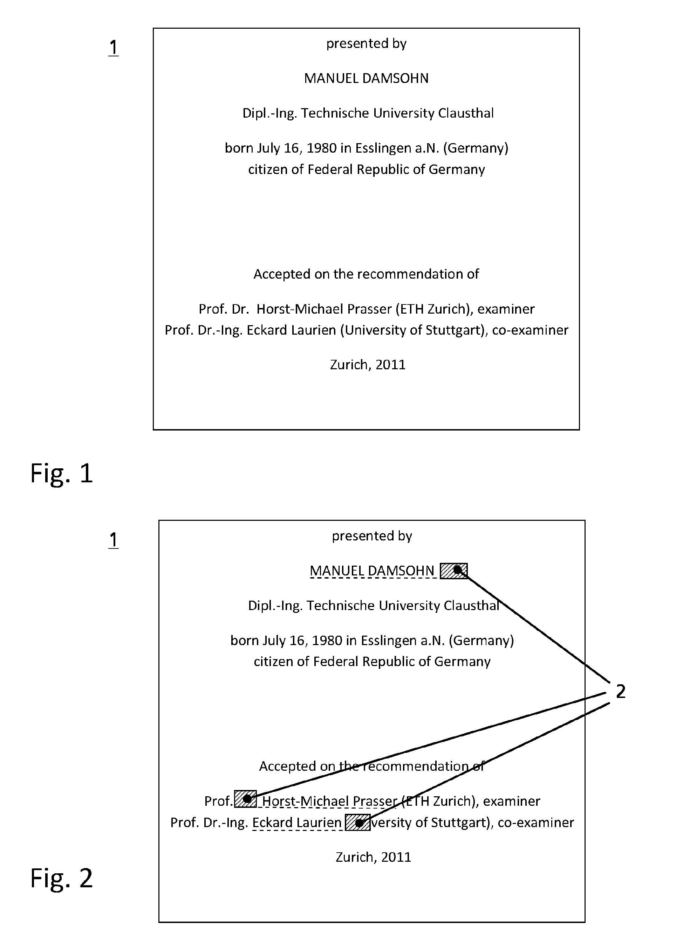

In a first step of the present invention a snapshot or any other frame of the screen of the user's personal computer, mobile phone or other device is taken. An example of such a snapshot is shown in Fig. 1. Fig. 1 shows a normal text element shown on the screen. As understood, the inventive method is applicable to any application shown on screen, including presence applications, e.g. Facebook or Skype. The result will be that the presence of a person or entity in a single application can be checked in other applications running on the personal computer or mobile phone. Some applications may be internet-based e.g. Google or Facebook and the presence of a person or an entity can easily be checked over the Internet. These internet based applications then can easily be included into the presence control.

Normal personal computers have a built-in application to produce such a screenshot or frames. From said frame of the screen text recognition is done. This is done by any known optical character recognition (OCR) software. When doing OCR of the snapshot, advantageously the X/Y coordinates of the text are preserved so presence controls can be rendered in the right locations in the text.

Thereafter, names in the text have to be found using any known Named Entity Recognition (NER) software. This may require determining a language of the text first. All online network applications running on said computer or a mobile phone might be identified. Once names and available communication applications are known, in another step it will be identified in which application said recognized person is currently connected. Then, a presence status is shown on said screen in which application said recognized person is currently connected. The presence status gives a general overview of persons, status, location, possibilities to contact the person, etc. for any online network application. The step of displaying this presence status may advantageously comprise displaying a presence list, where the presence status of a number of persons which have been detected is displayed.

Both the OCR and/or the NER parts could advantageously be performed locally on the client computer, or, they could be provided via an internet-based service, i. e. meaning the screenshot would be sent over the internet to a server which would do some or all of the OCR and NER tasks and return the results to the computer or mobile phone of the client. Still, it would be possible that only one of OCR and NER is done locally and the other is done as an internet based service.

Alternatively, the user could select manually a name of a person on said screen by said user with his mouse. This selected name is copied to a clipboard, and thereafter the name in the clipboard is looked up. Highlighting and rendering the presence in the found applications may be done as described in relation with Fig. 2.

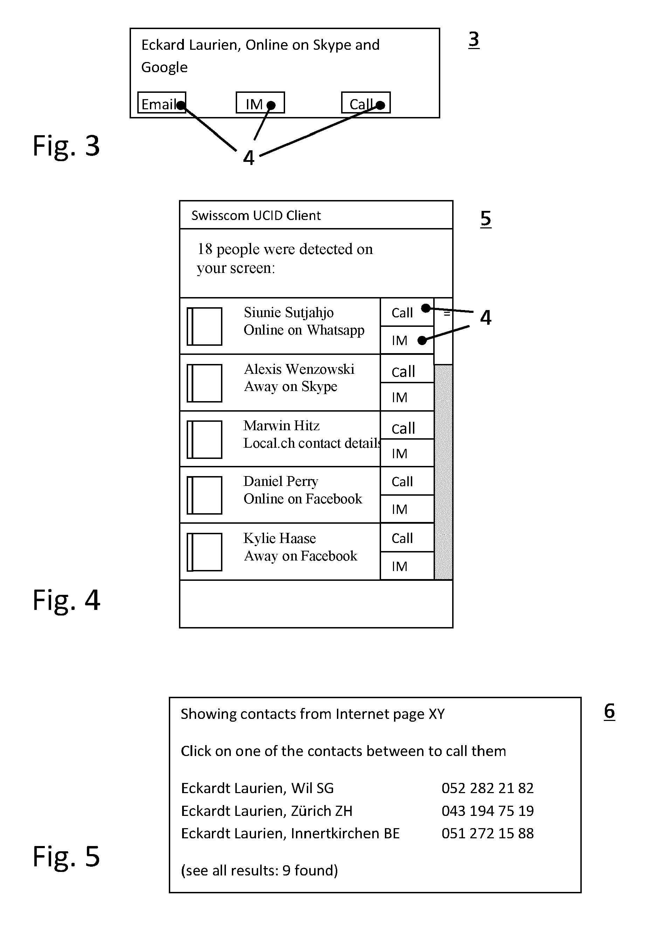

Fig. 2 shows the screenshot of Fig. 1, where different names have been recognized and marked. In this first embodiment, the names are underlined and beside the name a little icon 2, which may be actionable, may be displayed and show in which application the person is present and how he or she can be reached. The client side application may detect if a given contact has limited modalities through which they can be reached. For example, since facebook may receive instant messages, then if a contact is online with facebook, the software may indicate the available communication modalities as instant messages. Said presence status of the person can as well be shown when said mouse hovers over one of said names. An example of such a contact card 3, which appears once the user chooses a person, is shown in Fig. 3. In this case, the icon 2 for Eckard Laurien has been chosen. He is online on Skype and Google and can be reached by Email, Instant Messaging IM and a VoiP call. The user can directly click on one of the icons to contact directly the person. In the embodiment of Fig. 2, 3 the presence control process may be overlaid on the text parts of the screen or on the running applications without modifying the state of the applications. Alternatively, a space can be detected next to a recognized name and showing the presence there. Of course, any additional information for said person can be shown on said presence list.

If the X/Y coordinates of a screen shot are unavailable, a small window of contacts is shown somewhere on the screen, e.g. in a corner. An example of such a contact lists 5 is given in Fig. 4. For each recognized contact the communication application and the contact icon 4 are illustrated.

Both the contact card 3 (Fig. 3) and the contact list 5 (Fig. 4) once shown on the screen may be continuously or periodically updated, for example, as the presence of said person in said applications might change over time. Therefore, it is possible that if a person is not contactable in a way through a specific application, although shown in the list, the client side application automatically chooses a different application, to which said recognized person is currently connected. This process may be transparent to the user.

Additionally or alternatively, if NER does not work, it is possible to search the OCR text for names against a personal list of names of said user stored in said computer or a mobile phone to see.

Alternatively, the names recognition comprises the step of contacting an internet page or internet data source, such as a telephone book or any other register, where names may be found. Fig. 5 shows a contact list 6 with information from an Internet page XY. In this case, as different options are available, these options including found telephone numbers are shown, when clicking on or hovering over the name or icon 2 in Fig. 2.

Furthermore, there are location-based internet services like FourSquare that allow people to "check in" on the internet, which makes their location known. In the framework of the invention, such location-based internet services could be used to show that the person is online, available, checked into Desperados Restaurant 9 minutes ago, for example. Lync (Microsoft Communicator) has as well automatic location services built in, which could be used. A graphical aid could be used, for example, the closer someone is to the location of the user, then the larger the presence icon would become, so at a glance the user could see who is geographically close to them.

Furthermore, it could be possible that an online calendar of a recognized person is used to show what a person is doing at the moment (e.g. "available, online, has meeting ABCD in 10 minutes"). A graphical aid could be used, e.g. contacts that are about to become unavailable because they have a meeting soon could have their name in italics, or have a partially faded presence icon, etc.

In accordance with various embodiments of the invention, the user may start the client side application and any related step of the inventive method by pressing a key or a combination of keys of a keyboard of said personal computer or mobile phone.

The invention relates also to a computer program product comprising a software code of a client side application which can be loaded in a memory of a personal computer or mobile phone, and executed by a processor so as to run the steps of any of the inventive claims.

The invention relates as well to a computer program product comprising a software code of a client side application which can be loaded in the memory of a personal computer or mobile phone, and executed by a processor so as to run the steps of any of the claims.

In the following three examples are given for the present invention are given.

Example 1: Calling from Facebook. User is connected to Facebook, and sees from a status update that a friend is back from vacation. User uses the present invention to see the presence of the contact in available communication applications. User interacts with the control to place a call over the online network that the friend is logged into, for example.

Example 2: Chatting with WhatsApp users from Skype. User has Skype open on their computer, wants to chat with a friend, but the friend is offline in Skype. So user uses the present invention to determine the presence of the contact, and sees they are online in WhatsApp. User interacts with the presence control and starts an Instant Message IM conversation over WhatsApp.

Example 3: Internet page integration. User viewing a PDF, sees a name and wants to call that person. User uses the present invention to determine the presence of the contact. User interacts with the control and sees that although the contact is not on the user's buddy list, the contact details were found on an internet page such as local.ch. User uses the control to place a call.

Reference numbers
- 1: Screen
- 2: Icon for recognized name
- 3: Contact card
- 4: Icon for connection
- 5: Contact list
- 6: Contact list including options

## Claims

1. A method of obtaining contact information for a person or an entity, wherein said method comprises:
● detecting a name of said person or said entity in a frame from a screen (1) of a device;
● determining a presence status for said detected name based on one or more connectivity status for said detected name in one or more communication applications and/or one or more databases, where said one or more communication applications operate on said device from which said frame originates and where said one or more databases are accessible on said device;
● displaying said presence status (3, 5) on said screen (1) of said device.

2. The method according to claim 1, comprising detecting said name of said person or said entity using text recognition (OCR), wherein said frame from said screen is a screen shot.

3. The method according to claim 1, comprising detecting said name of said person or said entity, wherein said frame from said screen comprises text selected by user of said device.

4. The method according to any of the claims 1 to 3, comprising detecting said name of said person or said entity using Named Entity Recognition (NER).

5. The method according to any of the claims 1 to 4, comprising detecting said name of said person or said entity on an internet based service, and said detected name is communicated back to said device from which said frame originates.

6. The method according to any of the claims 1 to 5, wherein said device is a computer communicatively coupled to a communication network.

7. The method according to any of the claims 1 to 6, wherein the step of displaying said presence status (3, 5) on said screen (1) comprises a presence list, where the presence status of a number of persons is displayed.

8. The method according to any of the claims 1 to 7, comprising determining said presence status based on location-based internet service data and/or a web-service associated with said one or more communication applications.

9. The method according to any of the claims 1 to 8, wherein said one or more databases is a personal list of names on said device, or where said one or more databases are accessible via the Internet.

10. The method according to any of the claims 1 to 9, comprising highlighting said detected name on said screen, and displaying said presence status when the mouse pointer is over said highlighted name.

11. The method according to any of the claims 1 to 10, comprising detecting a space next to said detected name and displaying said presence status (3, 5) there.

12. The method according to any of the claims 1 to 11, wherein said method is initiated by pressing one or more keys on said device.

13. The method according to any of the claims 1 to 12, comprising updating said determined presence status continuously or periodically.

14. The method according to any of the claims 1 to 13 wherein clicking on said presence status initiates a communication session over an online network to said person or said entity.

15. The method according to claim 14, comprising automatically selecting a second one of said one or more communication applications and initiate a second communication session if said communication session cannot be established over a first one of said one or more communication applications.

16. Computer program product comprising a software code of a client side application which can be loaded in a memory of a personal computer or mobile phone, and executed by a processor so as to run the steps of any of the claims 1 to 15.
